# EUROPÄISCHE PATENTSCHRIFT

(11) **EP 0 778 436 B1**
(45) Veröffentlichungstag und Bekanntmachung des Hinweises auf die Patenterteilung: **14.03.2001**
(21) Anmeldenummer: 95119057.8
(22) Anmeldetag: 04.12.1995
(51) Int. Cl.: F16L 3/227, F16L 3/10, H02G 3/36, H02G 3/30

(54) **Tülle-Halter-Vorrichtung**
Retainer for a clamp
Elément de fixation pour collier de serrage

(43) Veröffentlichungstag der Anmeldung: 11.06.1997
(73) Patentinhaber: Murrplastik System-Technik GmbH, 71567 Oppenweiler (DE)
(72) Erfinder: Funk, Rainer, D-71543 Wüstenrot (DE); Ehmann, Bruno, D-73563 Mögglingen (DE)
(74) Vertreter: Jeck, Anton, Dipl.-Ing.

(56) Entgegenhaltungen:
- EP-A- 0 257 367
- DE-A- 2 603 981
- DE-C- 4 312 064
- FR-A- 2 683 608
- US-A- 3 458 163
- US-A- 4 907 766

## Beschreibung

Die Erfindung betrifft eine Tülle für Kabel, Schläuche oder Leitungen, mit einer Zugentlastung.

Herkömmliche Tüllen der eingangs genannten Art bestehen regelmäßig aus einem elastisch verformbaren Werkstoff, z.B. Gummi oder Kunststoff und dienen dazu, eine unverrückbare Verbindung zwischen mindestens einem Kabel und einer anderen Vorrichtung, z.B. Kabeldurchführungsleiste, herzustellen. Dabei wird die Tülle, die regelmäßig eine zylindrische Aufnahme für die Kabel aufweist, radialseitig zusammengedrückt, so daß sie mit dem aufgenommenen Kabel in Druckverbindung steht. Hat das Kabel, es können auch mehrere Kabel gleichzeitig sein, einen kleineren Außendurchmesser als der Innendurchmesser der Tülle, dann sind die gewünschten unverrückbaren Verbindungen nicht ohne weiteres herstellbar. Vielmehr müssen in die Tülle zusätzliche Körper reingebracht werden, um den freien Raum auszufüllen.

So ist z. B. in der DE-GM 9 310 562 eine Kabelhalterung mit Zugentlastung, vorzugsweise für elektrische Steckverbindungen, mit zwei, einander sicherbaren Gehäuseabschnitten eines Steckverbindungselementes zur Bildung eines Aufnahmeraumes für ein Kabel offenbart. In dem Aufnahmeraum ist mindestens ein Klemmstück zum Festhalten des Kabels angeordnet. Das Klemmstück ist über ein nachgiebiges Element gelenkig mit dem einen Gehäuseabschnitt verbunden. Im bekannten Falle können nur Kabel oder Schläuche ordnungsgemäß festgehalten werden, deren Volumen in etwa mit dem Aufnahmeraum vergleichbar ist. Sind die Kabel dagegen deutlich kleiner, dann ist eine ordnungsgemäße Verbindung mit der Kabelhalterung nicht gewährleistet. In der US-PS 3 676 837 ist ein Ring offenbart, der ein Drahtstück trägt, das mit einem Kabel umfangseitig verbindbar ist. Das Drahtstück ist im mittleren Bereich des Ringes angeordnet, der seinerseits innerhalb eines Stecker-Gehäuses unterbegracht ist, so daß der Zugang zum Ring nach Konfektionierung des Steckers praktisch nicht möglich ist. Schließlich ist in der DE 3 509 397 C2 eine Vorrichtung zur Zugentlastung und Verdrehungssicherung eines elektrischen Kabels an einem Stecker offenbart. Dabei sind in einer das Kabel umgebenden Hülle (in Durchlaßöffnungen der Hülle) verschiebbare Klötze angeordnet. Die Klötze sind mit ihren den Kabeln zugewandten Innenseiten an das Kabel andrückbar und deren dem Kabel abgewandten Außenseiten sind an ein, eine geschlossene Schleife bildendes Band angelehnt. Die Schleifengröße des Bandes ist mit einer Bandverschiebungseinrichtung veränderbar. Da das Band außerhalb der Hülle angeordnet ist, können nur solche Kabel wirksam fixiert werden, deren Außenumfang mit dem Innenumfang der Hülle vergleichbar ist. Darüber hinaus ist die bekannte Zugentlastung kompliziert in ihrem Aufbau.

Durch die EP-A1-0 257 367 ist eine lösbare Klemmschelle für Schläuche oder dergleichen bekannt. Diese Klemmschelle ist mit einem an eine Wand befestigbaren Grundkörper, der einen angeformten Arm mit einer mit dem Schlauch zusammenarbeitenden, konkaven Partie besitzt, und mit einem Bügel versehen, der eine mit dem Schlauch zusammenarbeitende, konkave Partie aufweist. Der Bügel ist mit dem Arm gelenkig verbunden und weist an seinem freien Ende eine Rastkupplung mit Haken auf, die mit einer Rastkupplung des Arms lösbar verbindbar ist. Seitlich von der konkaven Partie des Armes und in Längsrichtung des Schlauches ist an einem Vorsprung mindestens ein mit der Klemmschelle fest verbindbares Band als Zugentlastung angeordnet, das in seinem wirksamen Zustand mit den Kabeln fest verbunden ist. Das Endstück des Schlauches ist vom Bügel und dem Arm gehalten. Der Vorsprung ist als quaderförmiger Körper ausgebildet und weist zwei Schlitze auf, durch die das Zugentlastungsband durchgezogen ist.

Ausgehend von dem obigen Stand der Technik liegt der Erfindung die Aufgabe zugrunde, hier Abhilfe zu schaffen.

Die gestelle Aufgabe wird erfindungsgemäß durch die Merkmale des Anspruches 1 gelöst.

Man erkennt, daß die Erfindung jedenfalls dann verwirklicht ist, wenn es sich um eine vorzugsweise durch Kunststoffspritzen herstellbare Tülle handelt, die zusätzlich eine Zugentlastung aufweist, durch die die eigentliche Verbindung zwischen dem Kabel und der Tülle hergestellt werden kann. Eine solche Tülle kann in bekannter Weise mit anderen Körpern, z.B. Kabeldurchführungsleisten, verbunden werden.

Weitere zweckmäßige und vorteilhafte Ausgestaltungen der Erfindung gehen aus den Unteransprüchen hervor.

Eine besonders zweckmäßige Ausgestaltung sieht vor, daß die Zugentlastung die Kabel um mehr als 180° umgreift. Dabei kann die Zugentlastung aus flexiblen oder verformbaren Werkstoffen bestehen und sowohl das Kabel als auch zumindest einen Teil der Tülle umgreifen. Ferner ist vorgesehen, daß die Zugentlastung das Kabel um mehr als 360° umgreift. Im Rahmen dieses Erfindungsgedankens ist es besonders zweckmäßig, wenn die Tülle einen Vorsprung aufweist und die Zugentlastung trägt, wobei der Vorsprung sich in Achsrichtung des Kabels erstreckt. Handelt es sich um eine Tülle mit einem ringförmigen Querschnitt, dann ist es zweckmäßiger, wenn die Tülle in Richtung der Kabel geschlitzt ist und der Vorsprung in seinem Querschnitt bogenförmig und Teil des Mantels der Tülle ist. Der Schlitz gewährleistet eine gute

Anpassung der Tülle innerhalb einer Vorrichtung, während der das Kabel ausrichtende Vorsprung eine Verbindung zwischen der Tülle und dem Kabel ermöglicht, die sich außerhalb der Vorrichtung befindet. Dadurch wird die Handhabbarkeit der Zugentlastung verbessert.

Eine weitere zweckmäßige Ausgestaltung der Erfindung sieht vor, daß der Vorsprung mindestens eine Öffnung, z.B. Schlitz, Durchbruch oder dgl., zur Halterung der Zugentlastung aufweist, durch den ein Teil der bandförmigen Zugentlastung hindurchziehbar ist. Hierdurch wird eine unverlierbare Verbindung zwischen der Tülle und der Zugentlastung sichergestellt.

Ein Ausführungsbeispiel der Erfindung ist in der Zeichnung schematisch dargestellt und wird im folgenden näher erläutert. Es zeigen
- Fig. 1: eine Tülle in axialer Draufsicht,
- Fig. 2: die in Fig. 1 dargestellte Tülle in radialer Draufsicht,
- Fig. 3: einen Schnitt entlang der Linie III - III nach Fig. 1,
- Fig. 4: einen Schnitt entlang der Linie IV - IV nach Fig. 3,
- Fig. 5: eine Kabeldurchführungsleiste mit einer Tülle und
- Fig. 6: die in Fig. 5 dargestellte Kabeldurchführungsleiste in vertikaler Draufsicht.

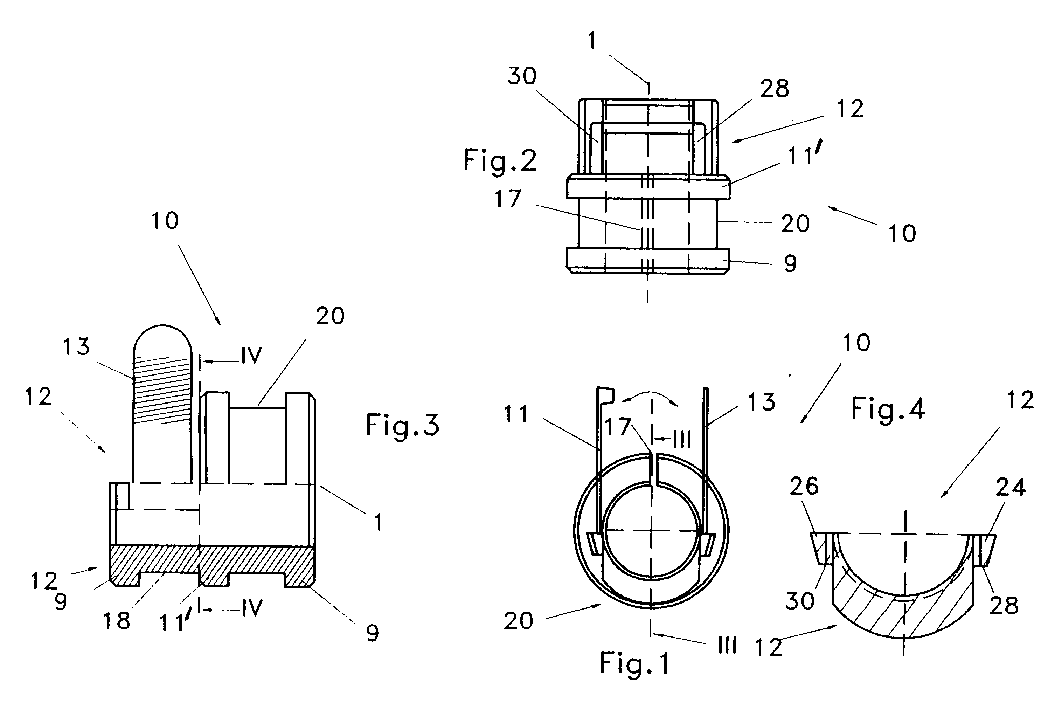

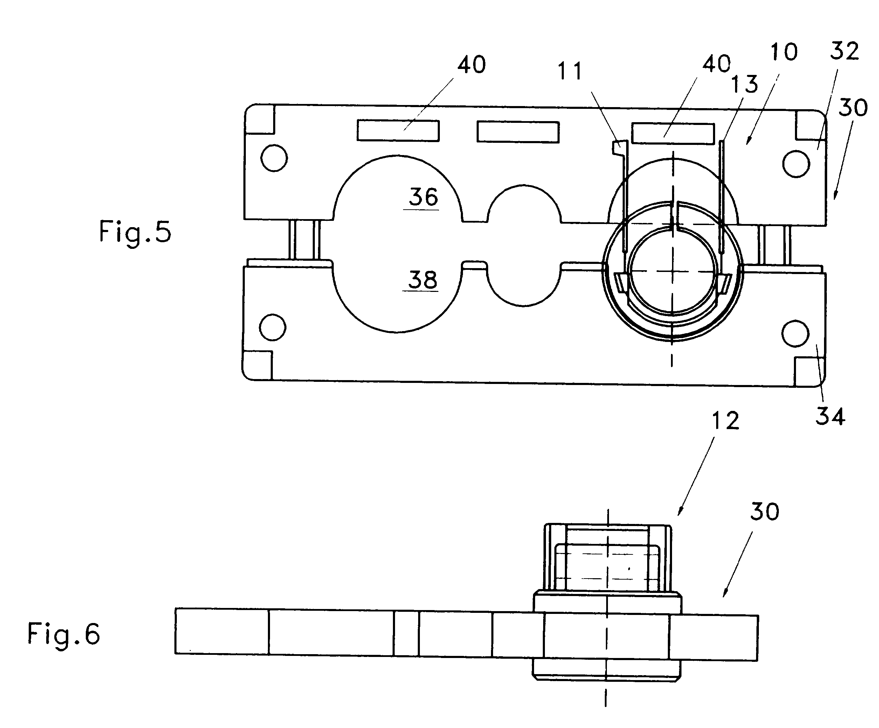

In den Fig. 1 bis 3 ist eine Tülle 10 für Kabel, Schläuche oder Leitungen dargestellt, die eine Zugentlastung 11, 13 aufweist, die sowohl mit einem nicht dargestellten Kabel als auch mit der Tülle 10 fest verbindbar, jedoch lösbar ist. Die Zugentlastung 11, 13 umgreift die Kabel um mehr als 180° und besteht aus flexiblem oder verformbaren Werkstoff in Form eines flachen Streifens. Dabei umgreift die Zugentlastung sowohl das Kabel als auch zumindest einen Teil 12 der Tülle 10. Die Tülle 10 weist einen Vorsprung 12 auf, der die Zugentlastung trägt, wobei der Vorsprung 12 sich in Achsrichtung 1 der Kabel erstreckt. Man erkennt, daß die Tülle einen ringförmigen Querschnitt aufweist (vgl. Fig. 1), wobei sie in Richtung der Kabel bzw. der Achse 1 geschlitzt ist. Der Vorsprung 12 ist in seinem Querschnitt bogenförmig und integraler Teil der Tülle 10. Der Vorsprung 12 weist zwei Schlitze 28 und 30 auf, die in angeformten Vorsprüngen 24 und 26 ausgebildet sind. Die Schlitze 28 und 30 dienen zur Halterung der bandförmigen Zugentlastung 13. Der ringförmige Teil der Tülle besitzt zwei Bunde 9 und 11' zwischen den eine Ringnut 20 ausgebildet ist, die zur Festlegung der Tülle innerhalb einer Zugentlastung (Fig. 5 und 6) angeordnet ist. Der axial gerichtete Schlitz 17 ist so gewählt, daß der Aufnahmeraum 6 der Tülle in seinem Innendurchmesser veränderbar ist.

Im Vorsprung 12 ist ebenfalls eine außenseitig ausgebildete Nut 18 vorgesehen, die durch die bogenförmigen Vorsprünge 9 und 11' definiert ist. Diese Nut dient zur besseren Positionierung der Zugentlastung 13.

Bei der Herstellung einer festen Verbindung zwischen der Tülle und einem oder mehreren Kabeln wird wie folgt vorgegangen:

Das Kabel wird in die Tülle gelegt. Sodann werden die Enden der Zugentlastung 11 und 13 miteinander verbunden, so daß sie das Kabel um mehr als 360° umgreifen und eine feste Verbindung zwischen der Zugentlastung 13 und dem Vorsprung, der intergraler Bestandteil der Tülle 10 ist, herstellen. Die aus einem Teil bestehende Zugentlastung 11, 13 besteht hier aus einer Zunge (das Endstück von 13) und einer Lasche, das Endstück von 11. Die Außenseite der Zunge weist eine Vielzahl von Rillen auf, die mit der Lasche fast stufenlos verbindbar sind. Allgemein könnten diese Endstücke miteinander auch verknotet werden. Die aufgenommenen Kabel sind mit der Tülle fest verbunden und können von der Tülle nur dann gelöst werden, wenn die Zugentlastung 13 von den Kabeln gelöst wird. Durch die vorgeschlagenen Maßnahmen können daher mit der Tülle auch Kabel verbunden werden, deren Außendurchmesser merklich kleiner ist als der Innendurchmesser der Tülle.

In den Fig. 5 und 6 ist eine Kabeldurchführungsleiste 30 dargestellt, die zwei Teile 32 und 34 mit Bezeichnungsfeldern 40 und Aufnahmen 36 und 38 aufweist. Der Innenumriß der Aufnahmen 36 und 38 ist auf den Außenumriß der Tülle 10 angepaßt, wobei die Dicke der Teile 32 und 34 etwa der Breite der Nut 20 entspricht. Die mit Kabeln versehene Tülle wird zunächst in die Aufnahme 38 gelegt und sodann mit dem Teil 32 verbunden. Nach Herstellung einer festen Verbindung zwischen der Kabeldurchführungsleiste 30 und der Tülle 10 werden die Endstücke 11 und 13 der Zugentlastung miteinander verbunden, und zwar derart, daß eine feste Verbindung zwischen den Kabeln und der Zugentlastung hergestellt wird. Die Kabel haben somit in bezug auf die Kabeldurchführungsleiste eine feste Position eingenommen.

## Patentansprüche

1. Tülle (10) für Kabel, Schläuche oder Leitungen, mit einer Zugentlastung (13),
dadurch gekennzeichnet,
daß sie mit einem Vorsprung (12) versehen ist, der die Zugentlastung (13), z.B. Verbindungsorgan, Haltemittel oder dergleichen, trägt, daß die Zugentlastung (13) sowohl mit dem Kabel als auch mit der Tülle (10) verbindbar ist und daß der Vorsprung (12) in seinem Querschnitt bogenförmig und ein Teil des Mantels der Tülle (10) ist.

2. Tülle nach Anspruch 1,
dadurch gekennzeichnet,
daß die Zugentlastung (13) die Kabel um mehr als 180° umgreift.

3. Tülle nach Anspruch 1 oder 2,
dadurch gekennzeichnet,
daß die Zugentlastung (13) aus flexiblem oder verformbarem Werkstoff besteht und sowohl das Kabel als auch zumindest einen Teil (12) der Tülle (10) umgreift.

4. Tülle nach nach einem der Ansprüche 1 bis 3,
dadurch gekennzeichnet,
daß die Zugentlastung (13) das Kabel um mehr als 360° umgreift.

5. Tülle nach einem der Ansprüche 1 bis 4,
dadurch gekennzeichnet,
daß der Vorsprung (12) sich in Längsmittelachse der Tülle erstreckt.

6. Tülle nach einem der Ansprüche 1 bis 5 mit einem ringförmigen Querschnitt,
dadurch gekennzeichnet,
daß die Tülle (10) in ihrer Längsmittelachse geschlitzt ist.

7. Tülle nach einem der Ansprüche 1 bis 6,
dadurch gekennzeichnet,
daß der Vorsprung (12) mindestens eine Öffnung, insbesondere Schlitz (28, 30), zur Halterung der Zugentlastung (13) aufweist.

8. Tülle nach einem der Ansprüche 1 bis 7,
dadurch gekennzeichnet,
daß mindestens zwei Schlitze (28, 30) vorgesehen sind, durch die ein Teil der bandförmigen Zugentlastung (13) hindurchziehbar ist.

9. Tülle nach einem der Ansprüche 1 bis 8,
dadurch gekennzeichnet,
daß die Schlitze (28, 30) in bezug auf die Längsmittelachse der Tülle symmetrisch angeordnet und ausgebildet sind.

## Claims

1. Bushing (10) for cables, hoses or lines, having a tension-relieving means (13), characterised in that it is provided with a projection member (12), which carries the tension-relieving means (13), e.g. connecting member, retaining means of the like, in that the tension-relieving means (13) is connectable both to the cable and to the bushing (10), and in that the projection member (12) has an arcuate cross-section and is part of the casing of the bushing (10).

2. Bushing according to claim 1, characterised in that the tension-relieving means (13) surrounds the cable by more than 180°.

3. Bushing according to claim 1 or 2, characterised in that the tension-relieving means (13) is formed from flexible or deformable material and surrounds both the cable and at least a portion (12) of the bushing (10).

4. Bushing according to one of claims 1 to 3, characterised in that the tension-relieving means (13) surrounds the cable by more than 360°.

5. Bushing according to one of claims 1 to 4, characterised in that the projection member (12) extends in the central longitudinal axis of the bushing.

6. Bushing according to one of claims 1 to 5, having an annular cross-section, characterised in that the bushing (10) is slotted in its central longitudinal axis.

7. Bushing according to one of claims 1 to 6, characterised in that the projection member (12) has at least one opening, more especially slot (28, 30), for retaining the tension-relieving means (13).

8. Bushing according to one of claims 1 to 7, characterised in that at least two slots (28, 30) are provided, through which a portion of the strip-like tension-relieving means (13) can be drawn.

9. Bushing according to one of claims 1 to 8, characterised in that the slots (28, 30) are disposed and configured symmetrically relative to the central longitudinal axis of the bushing.

## Revendications

1. Collier de serrage (10) pour des câbles, des tuyaux ou des canalisations, avec un dispositif de soulagement de contrainte (13)
caractérisé
en ce qu'il est doté d'une protubérance (12), qui porte le dispositif de soulagement de contrainte, par exemple un organe de liaison, un moyen de fixation ou similaire,
en ce que le dispositif de soulagement de contrainte (13) peut être relié tant au câble qu'également au collier de serrage (10) et
en ce que la protubérance à une section transversale arquée et constitue une partie de l'enveloppe du collier de serrage (10)

2. Collier de serrage suivant la revendication 1,
caractérisé
en ce que le dispositif de soulagement de contrainte (13) entoure le câble de plus de 180°.

3. Collier des serrage suivant la revendication 1 ou la revendication 2,
caractérisé
en ce que le dispositif de soulagement de contrainte (13) est réalisé en un matériau flexible ou déformable et entoure tant le câble qu'également au moins une partie (12) du collier de serrage (10).

4. Collier de serrage suivant l'une quelconque des revendications de 1 à 3,
caractérisé
en ce que le dispositif de soulagement de contrainte (13) entoure le câble de plus de 360°.

5. Collier de serrage suivant l'une quelconque des revendications de 1 à 4,
caractérisé
en ce que la protubérance (12) est disposée en direction de l'axe longitudinal médian du collier de serrage.

6. Collier de serrage à section transversale circulaire suivant l'une quelconque des revendications de 1 à 5 ,
caractérisé
en ce que le collier de serrage (10) est fendu suivant son axe longitudinal médian.

7. Collier de serrage suivant l'une quelconque des revendications de 1 à 6,
caractérisé
en ce que la protubérance (12) présente au moins une ouverture, notamment une fente (28, 30) pour la fixation du dispositif de soulagement de contrainte (13).

8. Collier de serrage suivant l'une quelconque des revendications de 1 à 7,
caractérisé
en ce qu'au moins deux fentes (28, 30) sont prévues, au travers desquelles peut être tirée une partie du dispositif de soulagement de contrainte (13) en forme de bande.

9. Collier de serrage suivant l'une quelconque des revendications de 1 à 7,
caractérisé
en ce que les fentes (28, 30) sont disposées et conformées symétriquement par rapport à l'axe longitudinal médian du collier de serrage.
